# EUROPÄISCHE PATENTSCHRIFT

(11) **EP 0 639 423 B1**
(45) Veröffentlichungstag und Bekanntmachung des Hinweises auf die Patenterteilung: **23.10.1996**
(21) Anmeldenummer: 94112779.7
(22) Anmeldetag: 16.08.1994
(51) Int. Cl.: B23K 9/173, B23K 35/38

(54) **Schutzgas-Lichtbogen-Schweissverfahren für Nicht-Eisenmetalle, insbesondere Aluminiumwerkstoffe**
Shielding gas arc welding method for non-ferrous metals, especially aluminium materials
Procédé de soudage à arc sous gaz de protection pour métaux non-ferreux, particulièrement des matériaux en aluminium

(30) Priorität: 17.08.1993 DE 4327671
(43) Veröffentlichungstag der Anmeldung: 22.02.1995
(73) Patentinhaber: Linde Aktiengesellschaft, 65189 Wiesbaden (DE)
(72) Erfinder: Tischler, Friedrich, A-4650 Lambach (AT)
(74) Vertreter: Kasseckert, Rainer

(56) Entgegenhaltungen:
- EP-A- 0 442 475
- EP-A- 0 494 521
- EP-A- 0 544 187
- DE-C- 4 028 074
- PATENT ABSTRACTS OF JAPAN vol. 3, no. 68 (C-048) 13. Juni 1979 & JP-A-54 043 843 (NIPPON STEEL CORP) 6. April 1979
- WELDING REVIEW INTERNATIONAL, Bd.11, Nr.1, Februar 1992, REDHILL, SURREY, GB Seiten 17 - 20, XP000270868 R. LAHNSTEINER 'The T.I.M.E. process - an innovative MAG welding process'

## Beschreibung

Die Erfindung betrifft ein Schutzgas-Lichtbogen-Schweißverfahren für Nicht-Eisenwerkstoffe, insbesondere Aluminiumwerkstoffe und Aluminiumlegierungen, bei dem ein Schutzgasstrom kontinuierlich benachbart zur Elektrode der Schweißstelle zugeführt wird (abschmelzende oder nichtabschmelzende Elektrode möglich), wobei das Schutzgas aus Argon, Helium oder einem Gemisch dieser beiden Gase besteht. Die Erfindungbetrifft darüber hinaus ein Schutzgas zum Lichtbogenschweißen von Nicht-Eisenwerkstoffen, insbesondere von Aluminiumwerkstoffen und Aluminiumlegierungen, das Argon und/oder Helium enthält.

Das Schutzgas-Lichtbogenschweißen von Nicht-Eisenwerkstoffen und insbesondere Aluminium und seine Legierungen wird bislang üblicherweise mit einem Schutzgas aus Argon, Helium oder einem Gemisch dieser Gase ausgeführt (siehe beispielsweise in der DE-C2-33 28 272, Seite 1, unterer Teil). Dabei können in diesem Verfahren sowohl abschmelzende als auch nichtabschmelzende Elektroden zum Einsatz kommen. In einer Reihe von Anwendungsfällen, beispielsweise beim Schweißen frisch oberflächenbearbeiteter Werkstücke oder beim Schweißen von verschiedenen Al-Legierungen, treten bei den besagten Schweißmethoden jedoch während des Schweißvorgangs Schwierigkeiten auf, die sich in einem unruhigen Schweißvorgang mit instabilem Lichtbogen und in einer fehlerbehafteten Schweißung mit Mängeln in der Schmelzverbindung zwischen Grundwerkstoff und Schweißzusatzwerkstoff sowie unter Umständen erhöhter Porenhäufigkeit in der Schweißnaht äußern.

Die EP-0 544 178 A1 lehrt eine Verfahren zum Schutzgas-Lichtbogen-Schweißen von hochlegierten korrosionsbeständigen Stählen, insbesondere von Nickel- und Sonderstählen, mit einem Schutzgas, das neben Argon und/oder Helium einen Anteil an Kohlendioxid, an Sauerstoff oder an Kohlendioxid und Sauerstoff von 0,01 bis 0,5 Vol.-% enthält.

Aus der EP-0 442 475 A2 ist ein Verfahren zum Schutzgasmetall-Lichtbogen-Schweißen von hochlegierten Stählen und Nichteisenmetallen und ein Schutzgasgemisch zur Verwendung in diesem Verfahren bekannt, das zu 0,5 bis 0,95 Vol.-% aus Kohlendioxid, zu 30 bis 40 Vol.-% aus Helium und restlich aus Argon besteht.

In der JP-A-54 043 843 ist ein Verfahren zum Schutzgas-Lichtbogen-Schweißen (MG) von Al, Ti und Nb enthaltenden Nickellegierungen beschrieben, das mit einem Schutzgas arbeitet, das neben Argon 0,5 bis 10 % CO₂ oder 0,3 bis 5 % O₂ oder 0,3 bis 7 % CO₂ und O₂ enthält.

Der vorliegender Erfindung liegt die Aufgabe zugrunde, ein weiter optimiertes Lichtbogen-Schweißverfahren für Nichteisenmetalle und dabei insbesondere für aluminumhaltige Werkstoffe anzugeben, das die oben geschilderten Negativumstände abstellt, sowie ein verbessertes Schutzgas zum Lichtbogenschweißen von Nicht-Eisenwerkstoffen zur Verfügung zu stellen.

Diese Aufgabe wird für das Verfahren gemäß der Erfindung dadurch gelöst, daß das Schutzgas neben Argon und/oder Helium einen Anteil an Kohlendioxid, an Sauerstoff oder an Kohlendioxid und Sauerstoff von 0,01 bis 0,1 Vol.-% (100 bis 1000 ppm) aufweist.

Das erfindungsgemäße Schutzgas zum Lichtbogenschweißen von Nicht-Eisenwerkstoffen, insbesondere von Aluminiumwerkstoffen und Aluminiumlegierungen, enthält neben Argon und/oder Helium einen Anteil an Kohlendioxid, an Sauerstoff oder an Kohlendioxid und Sauerstoff von 0,01 bis 0,1 Vol.-% (100 bis 1000 ppm).

Der erfindungsgemäße Vorschlag beseitigt die oben geschilderten Nachteile, wobei dieser Effekt aufgrund der niedrigen Mischungsanteile der neben Argon und/oder Helium beigefügten Schutzgaskomponenten zugleich vorteilhaft und überraschend ist. Der günstige Effekt der niedriganteilig zugemischten Komponenten liegt darin begründet, daß es sich bei diesen einerseits um aktive Medien handelt, die daher auch auf den ablaufenden Schweißprozeß und insbesondere die Lichtbogenstabilität Einfluß nehmen können und dies offenbar auch tun, daß sich jedoch andererseits durch diese sauerstoffhaltigen Komponenten keine nachteilige Oxidationswirkung auf die gesamte Schweißnaht sowie die Nachbarbereiche auf dem Werkstück ergibt. Insgesamt werden die eingangs geschilderten Negativumstände praktisch vollständig beseitigt, ohne daß andere Nachteile verursacht werden. Durch die Anwendung der Erfindung wird insbesondere ein stabil brennender Lichtbogen erhalten, der sogar bei erniedrigten Schweißspannungen aufrechterhalten bleibt. Mit dem stabilisierten Lichtbogen geht eine verbesserte Wärmeübertragung einher, die sowohl zu günstigem Fließ- und Benetzungsverhalten des Schweiß- oder Schmelzbades als auch zu vorteilhaften Schmelzverbindungen zwischen Grundwerkstoff und Schweißzusatzwerkstoff führt. Ebenso wird eine günstige Ausgasung des Schmelzbades und in der Konsequenz eine niedrige Porenhäufigkeit erzielt.

Den Unteransprüchen des Anspruchssatzes sind ferner weitere vorteilhafte Ausbildungen der Erfindung zu entnehmen. Im folgenden wird anhand einiger vorteilhafter Anwendungsbeispiele die Erfindung näher erläutert.
- 1. Beispiel:: MIG-(bzw. MAG-) Schweißen einer Kehlnaht bei einem Al Mg 3 Bleches und einem Al Mg Si 0,5 Bleches mit 5 bzw. 10 mm Dicke;
- Schutzgas:: Argon + 250 ppm O₂
- Schweißdraht:: S-AlSi5 - 1,6 mm Stärke
- Drahtvorschub:: ca. 5 m/min
- Schweißspannung :: 25 Volt (Transarc 500)
- Schweißstrom:: 200 A
- 2. Beispiel:: WIG-Schweißen einer Kehlnaht bei zwei Al 99.5 Blechen mit der Stärke 1 mm:
- Schweißdraht:: S-Al MG 5, 3,2mm
- Schutzgas:: Argon + 500 ppm (0,05 Vol.-%) CO₂
- Schweißstrom:: 47 Ampere

Bei den betreffenden Beispielfällen ist zunächst hinsichtlich des Schweißablaufes selbst festzuhalten, daß mit den erfindungsgemäßen Schweißschutzgasen im Vergleich zum reinem Argon-Schweißschutzgas ein günstigerer Ablauf des Schweißvorgangs erhalten wird und zwar insbesondere dahingehend, daß jeweils mit dem sauerstoff- und/oder CO₂-haltigen Schutzgas ein stabiler und störungsfreier brennender Lichtbogen erhalten wird. Ebenso fällt bereits die alleinig optische Beurteilung des Schweißergebnisses bei den erfindungsgemäß hergestellten Schweißnähten besser aus. So sind beispielsweise die Nahtschuppung, die Nahtflankenausbildung sowie die Reinigungszone mit den vorgeschlagenen Gaszusätzen deutlich gleichmäßiger.

Ebenso ist beim Schweißvorgang selbst das Lichtbogengeräusch erniedrigt, und es ist darüber hinaus erkennbar, daß das Schweißbad mit den erfindungsgemäßen Schweißschutzgasen im Vergleich zu den bekannten Schweißschutzgasen ohne Sauerstoffträger einen dünnflüssigeren Zustand annimmt. Mit der erfindungsgemäßen Schweißmethode ergibt sich eine hochwertige Schmelzverbindung der jeweiligen Schweißpartner sowie eine günstig niedrige Porenhäufigkeit in der hergestellten Schweißnaht. Schließlich ergibt sich mit der vorgeschlagenen Methode eine erheblich verbesserte Überschweißbarkeit, so daß problemlos mehrere Lagen entsprechender Scheißnähte übereinander aufbringbar sind.

Insgesamt kann also festgestellt werden, daß mit dem erfindungsgemäßen Schweißverfahren und Schweißschutzgas gegenüber den vorbekannten Verfahren und Schutzgasen auf der Basis reiner Edelgase in vielen Einsatzfällen deutliche Vorteile erzielt werden können.

## Patentansprüche

1. Schutzgas-Lichtbogen-Schweißverfahren für Nicht-Eisenwerkstoffe, insbesondere Aluminiumwerkstoffe und Aluminiumlegierungen, bei dem ein Schutzgasstrom kontinuierlich benachbart zur Elektrode der Schweißstelle zugeführt wird, wobei das Schutzgas Argon, Helium oder ein Gemisch dieser beiden Gase enthält, **dadurch gekennzeichnet,** daß das Schutzgas neben Argon und/oder Helium einen Anteil an Kohlendioxid, an Sauerstoff oder an Kohlendioxid und Sauerstoff von 0,01 bis 0,1 Vol.-% (100 bis 1000 ppm) aufweist.

2. Schutzgas-Lichtbogen-Schweißverfahren nach Anspruch 1, dadurch gekennzeichnet, daß der Edelgasanteil des Schutzgases vollständig aus Argon besteht.

3. Schutzgas-Lichtbogen-Schweißverfahren nach Anspruch 1, dadurch gekennzeichnet, daß das Schutzgases aus 50 bis 99,9 % Vol./% Argon und 0 bis 50 Vol.-% Helium und im übrigen aus Kohlendioxid und/oder Sauerstoff besteht.

4. Lichtbogen-Schweißverfahren nach einem der Ansprüche 1 bis 3, dadurch gekennzeichnet, daß das Schutzgas als Fertiggemisch bereitgestellt ist.

5. Schutzgas-Lichtbogen-Schweißverfahren nach einem der Ansprüche 1 bis 3, dadurch gekennzeichnet, daß das Schutzgas an Ort und Stelle des Einsatzes aus den betreffenden Komponenten gemischt wird.

6. Schutzgas-Lichtbogen-Schweißverfahren nach einem der Ansprüche 1 bis 5, dadurch gekennzeichnet, daß als Aluminiumlegierung AlSi verwendet wird.

7. Schutzgas zum Lichtbogenschweißen von Nicht-Eisenwerkstoffen, insbesondere von Aluminiumwerkstoffen und Aluminiumlegierungen, das Argon und/oder Helium enthält, **dadurch gekennzeichnet,** daß das Schutzgas neben Argon und/oder Helium einen Anteil an Kohlendioxid, an Sauerstoff oder an Kohlendioxid und Sauerstoff von 0,01 bis 0,1 Vol.-% (100 bis 1000 ppm) enthält.

## Claims

1. Gas-shielded arc welding process for non-ferrous materials, in particular aluminium materials and aluminium alloys, in which a shielding-gas flow is continuously fed to the welding point, adjacent to the electrode, the shielding gas containing argon, helium or a mixture of these two gases, characterized in that, in addition to argon and/or helium, the shielding gas has a portion of carbon dioxide, oxygen, or carbon dioxide and oxygen, of 0.01 to 0.1 % by volume (100 to 1000 ppm).

2. Gas-shielded arc welding process according to Claim 1, characterized in that the inert-gas portion of the shielding gas consists entirely of argon.

3. Gas-shielded arc welding process according to Claim 1, characterized in that the shielding gas consists of 50 to 99.9 % by volume of argon and 0 to 50 % by volume of helium and, for the remainder, of carbon dioxide and/or oxygen.

4. Arc welding process according to one of Claims 1 to 3, characterized in that the shielding gas is prepared as a mixture ready for use.

5. Gas-shielded arc welding process according to one of Claims 1 to 3, characterized in that the shielding gas is mixed from the relevant components at the place of use.

6. Gas-shielded arc welding process according to one of Claims 1 to 5, characterized in that AlSi is used as the aluminium alloy.

7. Shielding gas for the arc welding of non-ferrous materials, in particular aluminium materials and aluminium alloys, which contains argon and/or helium, characterized in that, in addition to argon and/or helium, the shielding gas contains a portion of carbon dioxide, oxygen, or carbon dioxide and oxygen, of 0.01 to 0.1 % by volume (100 to 1000 ppm).

## Revendications

1. Procédé de soudage à arc sous gaz de protection pour métaux non ferreux, particulièrement des matériaux en aluminium et des alliages d'aluminium, lors duquel on achemine un courant de gaz de protection en continu au voisinage de l'électrode du point de soudage, le gaz de protection contenant de l'argon, de l'hélium ou un mélange de ces deux gaz, caractérisé en ce que le gas de protection, outre l'argon et/ou l'hélium, présente une proportion en dioxyde de carbone, en oxygène ou en dioxyde de carbone et en oxygène, de 0,01 à 0,1 % en volume (100 à 1 000 ppm).

2. Procédé de soudage à arc sous gaz de protection selon la revendication 1, caractérisé en ce que la proportion de gaz rares du gaz de protection se compose entièrement d'argon.

3. Procédé de soudage à arc sous gaz de protection selon la revendication 1, caractérisé en ce que la proportion de gaz de protection se compose de 50 à 99,9 % en volume d'argon, de 0 à 50 % en volume d'hélium et en outre de dioxyde de carbone et/ou d'oxygène.

4. Procédé de soudage à arc sous gaz de protection selon l'une quelconque des revendications 1 à 3, caractérisé en ce que le gaz de protection est préparé en tant que mélange prêt à l'usage.

5. Procédé de soudage à arc sous gaz de protection selon l'une quelconque des revendications 1 à 3, caractérisé en ce que le gaz de protection est mélangé à partir des composants correspondants au lieu et à l'endroit de l'utilisation.

6. Procédé de soudage à arc sous gaz de protection selon l'une quelconque des revendications 1 à 5, caractérisé en ce que l'on utilise en tant qu'alliage d'aluminium du AlSi.

7. Gaz de protection destiné au soudage à arc pour métaux non ferreux, particulièrement des matériaux en aluminium et des alliages d'aluminium, qui contient de l'argon et/ou de l'hélium, caractérisé en ce que le gas de protection, outre l'argon et/ou l'hélium, contient une proportion en dioxyde de carbone, en oxygène ou en dioxyde de carbone et en oxygène, de 0,01 à 0,1 % en volume (100 à 1 000 ppm).
